# FASCICULE DE BREVET EUROPEEN

(11) **EP 3 894 187 B1**
(45) Date de publication et mention de la délivrance du brevet: **04.02.2026**
(21) Numéro de dépôt: 19818067.1
(22) Date de dépôt: 11.12.2019
(51) Int. Cl.: B29C 65/48, B29C 65/02, B29L 31/30

(54) **ÉLÉMENT DE CARROSSERIE DE VÉHICULE COMPRENANT UNE PIÈCE D'ASPECT COLLÉE SUR UNE PIÈCE DE STRUCTURE**
KAROSSERIEELEMENT MIT EINEM AUF EINEM BAUTEIL AUFGEKLEBTEN VERKLEIDUNGSTEIL
VEHICLE BODY ELEMENT COMPRISING A TRIM PART GLUED ON A STRUCTURAL PART

(30) Priorité: 11.12.2018 FR 1872718
(43) Date de publication de la demande: 20.10.2021
(73) Titulaire: OPmobility SE, 69007 Lyon (FR)
(72) Inventeur: VIRELIZIER, François, 01150 Sainte-Julie (FR)
(74) Mandataire: LLR
(86) Numéro de dépôt international: PCT/EP2019/084668
(87) Numéro de publication internationale: WO 2020/120584

(56) Documents cités:
- EP-A1- 0 401 756
- US-A1- 2007 051 465
- US-B1- 8 211 268

## Description

L'invention a pour objet un élément de carrosserie de véhicule comprenant une pièce d'aspect et une pièce de structure en matière plastique.

Les éléments de carrosseries de ce type, notamment des hayons, sont constitués d'un panneau de structure intérieur en matériau thermodurcissable et d'un panneau extérieur, ou peau extérieure, en matière thermoplastique, collé sur la pièce intermédiaire et participant à l'aspect extérieur du véhicule.

Les éléments de carrosserie sont reliés au châssis du véhicule par le panneau de structure.

De manière connue, la pièce de structure est obtenue par moulage d'un matériau thermodurcissable à l'aide d'un procédé de type SMC (Sheet Moulding Compound). Le document de brevet US 8 211 268 B1 divulgue un assemblage collé entre des pièces thermoplastiques et thermodurcissables.

La peau formant la face extérieure est également une pièce moulée d'une épaisseur inférieure à 3mm, voire de l'ordre de 1mm, et considérée comme faible en regard des autres dimensions de la pièce, teintée dans la masse ou peinte, et résultant du moulage par injection d'un matériau thermoplastique tels que du Polypropylène (PP).

Ces deux panneaux sont réunis par un cordon de colle adapté pour adhérer sur chacun des panneaux, dont l'épaisseur varie de 0,5 mm à 3 mm.

Les deux panneaux en matière plastique ont des comportements thermomécaniques différents du fait de leur forme de leur dimensionnement en rigidité, des matériaux de moulage éventuellement différents employés pour leur réalisation et présentent de plus des coefficients linéaires d'expansion thermique (CLTE) très différents. A titre d'exemple, la peau peut avoir un CLTE de l'ordre de 40 10⁻⁶ mm/°C, tel que le Polypropylène chargé en talc qui présente un CLTE de l'ordre de 35 10⁻⁶ mm/°C, alors que la pièce de structure peut avoir un CLTE trois à quatre fois inférieur, tel que pour un SMC PE chargé de fibre de verre qui présente un CLTE de l'ordre de 13 10⁻⁶ mm/°C.

Ces différences de comportement thermomécaniques provoquent, en cas d'élévation de température, notamment en cas d'exposition à l'ensoleillement, des dilatations différentielles entre les panneaux provoquant des tensions importantes au sein du cordon de colle. La déformation du cordon de colle peut alors être insuffisante pour absorber ces dilatations différentielles ce qui engendre des marques visibles à chaud sur la pièce la moins rigide, en règle générale, la peau extérieure. De même, après refroidissement des deux panneaux et leur retour à leur forme initiale, le cordon de colle ne revient pas systématiquement à sa place originale, ce qui engendre également une contrainte résiduelle qui se transmet dans la peau considérée ici comme la pièce la plus souple, provoquant également des marques. Cette contrainte résiduelle résulte d'une caractéristique de la colle désignée par le terme de déformation rémanente, résultant du caractère non totalement élastique de la colle lors de sa mise en extension. Cette déformation rémanente engendre une déformation plastique et non réversible de la colle pendant une sollicitation mécanique, en particulier à température élevée, par exemple sous l'effet de l'ensoleillement du véhicule à une température souvent supérieure à 80°C voire à 100°C.

Un autre phénomène se manifeste également lors de l'étape d'assemblage de la peau et de la pièce intermédiaire de structure. En effet, lors de la polymérisation de la colle, et en l'absence de déformation thermique des panneaux, on observe un retrait de la colle susceptible de produire des marques sur la peau au niveau des cordons de colle.

Ces défauts de surface, visibles de l'extérieur, sont jugés inacceptables par les constructeurs de véhicules automobiles.

L'invention a pour objet de déterminer les caractéristiques descriptives les plus appropriées pour sélectionner une colle permettant d'assembler les deux panneaux de l'élément de carrosseries de véhicule ne présentant pas les défauts signalés ci-dessus.

L'élément de carrosserie de véhicule automobile selon l'invention comprend un panneau d'aspect en thermoplastique formant une peau extérieure et une pièce de structure intermédiaire en matériau thermodurcissable ayant un coefficient de dilatation thermique inférieur à celui du panneau d'aspect, les deux pièces étant réunies par un cordon de colle disposé sur une face d'une des deux pièces en vis-à-vis de l'autre pièce.

Cet élément de carrosserie se caractérise en ce que la colle présente à la fois :
- un retrait inférieur à 0,5 % lors de la phase de polymérisation de la colle,
- une déformation rémanente inférieure à 3% pour une déformation imposée de 15% à 110°C pendant une durée de 15 minutes.

La sélection d'une colle présentant ces caractéristiques offre ainsi les meilleures performances dans la majorité des cas de figure dans lesquels on procède à l'assemblage d'une peau extérieure sur une pièce de structure présentant un coefficient de dilatation inférieur, et usuellement mis en oeuvre dans l'industrie automobile.

L'apparition de déformations au droit des cordons de colle peut ainsi être évitée, et permet de satisfaire les cahiers des charges exigeants des constructeurs automobiles.

L'invention comprend également, isolément, ou en combinaison, les éléments suivants :
- Le panneau d'aspect est formé d'un matériau choisi parmi un des matériaux suivants :
   ∘ Polypropylène (PP) ou ,
   ∘ Polycarbonate (PC) ou,
   ∘ Acrylonitrile Butadiène Styrène (ABS) ou,
   ∘ Acrylonitrile Butadiène Styrène/Polycabonate (ABS/PC) ou,
   ∘ Polycarbonate/Polypropylène Terephtalate (PC/PBT) ou,
   ∘ Polycarbonate/Polyéthylène Téréphtalate (PC/PET) ou,
   ∘ Polyéthylène (PE).
- La pièce de structure intermédiaire est formée d'un matériau choisi parmi un des matériaux suivants :
   ∘ Polypropylène (PP), éventuellement renforcé par des fibres de verre (de type PPGFL) ou chargé en talc ou,
   ∘ SMC à matrice Polyester ou,
   ∘ Vinylester ou,
   ∘ Epoxy renforcé par des fibres de verre ou de carbone.
- Le cordon de colle a une largeur inférieure à 25 mm et préférentiellement inférieure à 15 mm.
- Le cordon de colle a une épaisseur comprise entre 0,8 mm et 3mm, et préférentiellement comprise entre 1 mm et 2 mm.
- Le module d'Young de la colle est compris entre 0,5 MPa et 10 MPa, et préférentiellement compris entre 0,5 et 3 MPa.
- La colle présente un allongement à la rupture compris entre 20% et 800%.
- Le rapport entre le coefficient de dilatation thermique du panneau d'aspect formant la peau extérieure et le coefficient de dilatation thermique de la pièce de structure intermédiaire est compris entre 1 et 5.
- Le panneau d'aspect formant la peau extérieure a une épaisseur comprise entre 1,5 mm et 5 mm.
- L'élément de carrosserie de véhicule est notamment un hayon ou une porte de coffre arrière ou un becquet de toit ou de hayon, ou un capot ou une porte latérale.

### Brève description des figures

L'invention sera mieux comprise à la lecture de la description qui suit et des figures annexées, qui sont fournies à titre d'exemples et ne présentent aucun caractère limitatif, dans lesquelles :
- [Fig. 1]

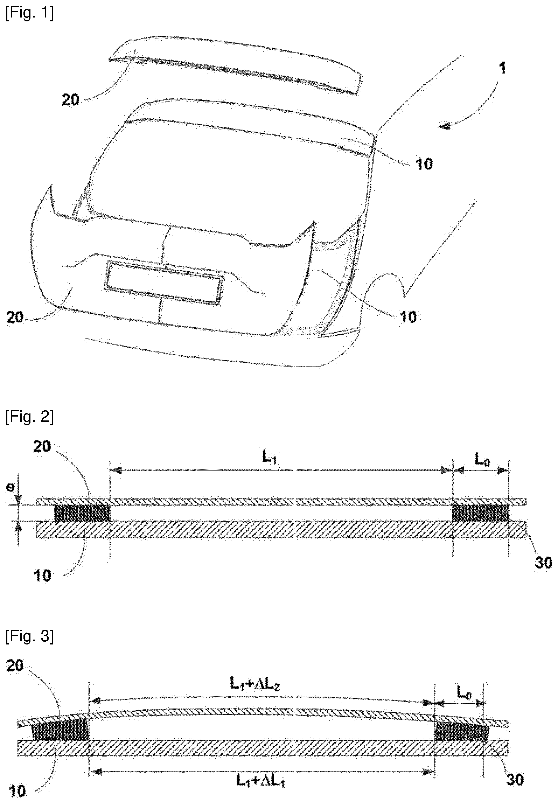

   La figure 1 est une représentation schématique en perspective d'un hayon arrière de véhicule.
- [Fig. 2]
   La figure 2 est une vue schématique en coupe des panneaux à température ambiante.
- [Fig. 3]
   La figure 3 est une vue schématique en coupe des panneaux soumis à un fort ensoleillement.

### Description détaillée

La partie arrière de la carrosserie du véhicule 1 telle que représentée à la figure 1 permet de visualiser les différentes pièces constituant le hayon. La pièce de structure intermédiaire 10 moulée supporte les charnières et les éléments de fermeture du hayon. Un panneau d'aspect formant une peau extérieure 20, se présentant ici en deux parties, est destiné à être collé sur la pièce de structure intermédiaire 10.

La pièce de structure est préférentiellement formée par un panneau en polypropylène de 3 à 4 mm d'épaisseur, renforcé à 40% de fibres de verre, dont le module d'Young est de l'ordre de 8000 MPa et dont le coefficient de dilatation thermique est d'environ 30 10⁻⁶ °K⁻¹ selon le matériau choisi.

Le cas échéant, la pièce de structure intermédiaire peut être réalisée par un procédé de type SMC.

Le panneau d'aspect formant la peau extérieure 20 est formé d'une ou plusieurs pièces moulées à la forme extérieure du hayon dont l'épaisseur varie de 1 mm à 3 mm. Le matériau choisi pour réaliser ce panneau d'aspect est usuellement du polypropylène, qui peut comprendre une charge de talc. Le panneau d'aspect peut être teinté dans la masse ou peint sur la face exposée vers l'extérieur du véhicule.

Le module d'Young de la peau en polypropylène chargé est de l'ordre de 1800 MPa et son coefficient de dilatation thermique peut également varier de 30 à 40 10⁻⁶ °K⁻¹ selon le matériau sélectionné.

Le cas échéant, ce panneau d'aspect peut être réalisé en Acrylonitrile Butadiène Styrène/Polycabonate (ABS/PC), en Polycarbonate/Polypropylène Terephtalate (PC/PBT), en Polycarbonate/Polyéthylène Téréphtalate (PC/PET) ou encore en Polyéthylène (PE).

Selon les matériaux choisis pour la réalisation de la pièce de structure intermédiaire 10 et le panneau d'aspect formant la peau extérieure 20, on observe que le rapport entre le coefficient de dilatation thermique de la pièce de structure intermédiaire et le coefficient de dilatation thermique de la peau extérieure 20 est très supérieur à 1 et peut aller couramment jusqu'à une valeur de 5.

La figure 2 est une vue en coupe de la pièce de structure intermédiaire 10 et du panneau d'aspect 20 réunis par un cordon de colle 30. Les deux panneaux sont représentés à la température ambiante de 20°C. Aucune dilatation différentielle n'est observable. La distance entre les deux cordons de colle 30, correspondant à la longueur libre et déformable du panneau entre ces deux cordons est égale à L₁. Pour la suite de la description, et à titre d'exemple, la distance L₁ est égale à 400mm. Les cordons de colle 30 ne subissent aucune tension particulière.

Lorsque la pièce de structure 10 et le panneau d'aspect 20 sont soumis à un ensoleillement intense, la température des matériaux peut s'élever rapidement et atteindre, par exemple, 80°C, voire plus dans certaines régions.

La figure 3 permet de visualiser le phénomène de dilatation différentielle. La pièce de structure 10 dont le coefficient de dilatation thermique α₁ est égal par exemple à 8 10⁻⁶°K⁻¹ se dilate alors d'une valeur ΔL₁ = α₁ x ΔT x L₁= α₁ x 60°x400= 0,2 mm environ. Et le panneau d'aspect dont le coefficient de dilatation thermique α₂ est égal par exemple à 40 10⁻⁶°K⁻¹ se dilate alors d'une valeur ΔL₂ = α₂ x 60°x400= 1 mm environ. Soit une différence (ΔL₂-ΔL₁) de dilatation entre les deux pièces, vue dans le plan moyen et entre les deux cordons de colle, de l'ordre de 0,8mm.

Les cordons de colle 30 ayant un module d'Young beaucoup plus faible que le panneau d'aspect ou que la pièce de structure intermédiaire se déforment dans la direction transversale et forment un bombement dans la direction perpendiculaire aux panneaux. Pour un cordon de colle d'une largeur L₀ de 15 mm cela représente une déformation du cordon égale à (ΔL₂₋ΔL₁)/2 /L₀, soit environ 2,6%. Bien évidemment, plus l'écart de température est élevé, plus les panneaux ont un coefficient de dilatation thermique différents ou plus les cordons de colle sont distants les uns des autres, plus ce ratio est élevé.

Cette déformation n'est pas purement élastique et provoque un fluage du matériau formant le cordon de colle. En revenant à la température ambiante, cette déformation dite rémanente du cordon de colle est susceptible d'engendrer des efforts parasites dites contraintes rémanentes provoquant l'apparition d'une légère déformation au droit du joint de colle. Et plus le cordon de colle est large, ou plus le cordon de colle a une épaisseur e faible, plus la contrainte rémanente est importante.

Pour établir une valeur de seuil de déformation du cordon de colle à ne pas dépasser, et en deçà duquel le phénomène de marquage n'est plus visible, il a été mis en évidence, de façon expérimentale, qu'une déformation rémanente inférieure à 3% pour une exposition à une température de 110°C pendant une durée de 15 minutes, permettait de satisfaire les cahiers des charges imposés par les constructeurs automobiles pour la plupart des matériaux choisis pour la réalisation des éléments de carrosseries de véhicule, lorsque le rapport des coefficients de dilatation thermique de la pièce de structure intermédiaire 10 et du panneau d'aspect 20 restent compris entre 1 et 5, comme cela a été évoqué ci-dessus pour les matériaux usuellement employés pour la fabrication des élément de carrosseries de véhicule. Le test est réalisé à l'aide d'une éprouvette altère standard de colle en comparant, à température ambiante, la longueur d'un échantillon de colle réticulée ou polymérisée, et la longueur de ce même échantillon revenu à la température ambiante après avoir subi une déformation imposée de 15% à une température de 110°C pendant une durée de 15 minutes.

Il a également été mis en évidence que la colle subit un retrait pendant le processus de fabrication de l'élément de carrosserie au cours de l'étape de réticulation. Cette étape de polymérisation s'effectue à température ambiante. Ce retrait engendre également des contraintes permanentes au niveau du cordon de colle qui sont également susceptibles de déformer la peau localement au droit du cordon, sans que l'élément de carrosserie soit exposé à des températures élevées.

Lorsque le retrait de la colle pendant la phase de réticulation est inférieur à 0,5 %, il a également été mis en évidence, toujours de manière expérimentale, que le défaut lié aux contraintes rémanentes exposé ci-dessus n'apparait plus de manière visible.

Le respect d'autres caractéristiques permet également de réduire le risque d'apparition de ce phénomène de marquage.

Ainsi, pour améliorer la déformation élastique et réduire les contraintes rémanentes, le cordon de colle a une largeur inférieure à 25 mm et préférentiellement inférieure à 15 mm, et une épaisseur comprise entre 0,8 mm et 3 mm et préférentiellement comprise entre 1,5 mm et 3 mm.

Pour minimiser les contraintes rémanentes, le module d'Young de la colle est compris entre 0,5 MPa et 10 MPa, et préférentiellement compris entre 0,5 et 3 MPa.

Enfin, pour éviter les amorces de rupture de la colle, on choisira une colle présentant un allongement à la rupture compris entre 20% et 800%.

Bien que de nombreuses colles soient susceptibles de respecter ces exigences, on choisira une colle compatible avec les matériaux formant la pièce de structure et le panneau d'aspect.

Compte tenu des matériaux les plus couramment utilisés évoqués précédemment, une colle polyuréthane (PU) semble la plus appropriée, et en règle générale de type Polyuréthane bi composant, formée du mélange d'un Polyol et d'un Isocyanate, de type Polyuréthane modifié silane (SPUR), ou encore de type Polyéthers modifiés silane (SPE ou SPTE).

Les colles formées par l'assemblage d'un poly-oxy-propylène-diamine, en proportion pondérale inférieure à 2,5%, et de di-isocyanate diphényle méthane ou des isomères homologues, en proportion pondérale comprise entre 2,5% et 10%, de diisocyanate de méthylène diphényle en proportion pondérale comprise entre 2,5% et 10%, de di-isocyanate de 4,4'-méthylène diphénylène en proportion pondérale inférieure à 2,5%, et comprenant un dodécane-1 -OL en proportion massique inférieure à 25% et du carbonate de calcium, en proportion massique comprise entre 50% et 100%, présentent les propriétés physiques recherchées. Cette composition peut également comprendre un organosilane, en proportion massique comprise entre 10% et 25%.

De même, des colles polyuréthane bi composant, bas module, haute flexibilité, durcissant à température ambiante, fournies par la Sté AXSON (marque déposée) sous la référence ADEKIT H6257 présentent une déformation rémanente de 1,8% après une mise en tension de 15% pendant 15 minutes à 110°C, et un retrait inférieur à 0,5% pendant la phase de réticulation. De même, la colle désignée sous la référence ADEKIT XP3767/7, du même fournisseur, ou sous la référence H6258 du fournisseur SIKA, démontre une déformation rémanente de 1,7% dans les mêmes conditions que celles citées précédemment, et un retrait également inférieur à 0,5% lors de la phase de réticulation.

Ces deux colles donnent de bons résultats et remplissent les caractéristiques techniques évoquées ci-dessus.

### NOMENCLATURE

- 1.: Carrosserie de véhicule.
- 10: Pièce de structure intermédiaire.
- 20.: Panneau d'aspect formant une peau extérieure.
- 30: Cordon de colle.
- L₀: Largeur du cordon de colle.
- L₁: Longueur séparant deux cordons de colle.
- e: Epaisseur du cordon de colle.
- α₁: Coefficient de dilatation thermique de la pièce de structure intermédiaire.
- α₂: Coefficient de dilatation thermique du panneau d'aspect formant la peau extérieure.
- ΔL₁: Dilatation thermique de la pièce de structure intermédiaire.
- ΔL₂: Dilatation thermique du panneau d'aspect formant une peau extérieure.

## Revendications

1. Elément de carrosserie de véhicule automobile comprenant un panneau d'aspect en thermoplastique formant une peau extérieure (20) et une pièce de structure intermédiaire (10) en matériau thermodurcissable ayant un coefficient de dilatation thermique inférieur à celui du panneau d'aspect, les deux pièces étant réunies par un cordon de colle (30) disposé sur une face d'une des deux pièces en vis-à-vis de l'autre pièce, **caractérisé en ce que** la colle est choisie parmi les colles de type polyuréthane bi composant formées du mélange d'un Polyol et d'un Isocyanate, et présente tout à la fois :
- un retrait inférieur à 0,5 % lors de la phase de polymérisation de la colle,
- une déformation rémanente inférieure à 3% pour une déformation imposée de 15% à 110°C pendant une durée de 15 minutes.

2. Elément de carrosserie de véhicule selon la revendication 1, dans lequel le panneau d'aspect (20) est formé d'un matériau choisi parmi un des matériaux suivants :
- Polypropylène (PP) ou,
- Polycarbonate (PC) ou,
- Acrylonitrile Butadiène Styrène (ABS) ou,
- Acrylonitrile Butadiène Styrène/Polycabonate (ABS/PC) ou
- Polycarbonate/Polypropylène Terephtalate (PC/PBT) ou
- Polycarbonate/Polyéthylène Téréphtalate (PC/PET) ou
- Polyéthylène (PE).

3. Elément de carrosserie de véhicule selon la revendication 1 ou la revendication 2, dans lequel la pièce de structure intermédiaire (10) est formée d'un matériau choisi parmi un des matériaux suivants :
Polypropylène (PP), éventuellement renforcé par des fibres de verre (de type PPGFL) ou chargé en talc ou
- SMC à matrice Polyester ou
- Vinylester ou
- Epoxy renforcé par des fibres de verre ou de carbone.

4. Élément de carrosserie de véhicule selon l'une quelconque des revendications précédentes, dans lequel le cordon de colle (30) a une largeur (L₀) inférieure à 25 mm et préférentiellement inférieure à 15 mm.

5. Élément de carrosserie de véhicule selon l'une quelconque des revendications précédentes dans lequel le cordon de colle (30) a une épaisseur (e) comprise entre 0,8 mm et 3mm, et préférentiellement comprise entre 1 mm et 2 mm.

6. Élément de carrosserie de véhicule selon l'une quelconque des revendications précédentes dans lequel le module d'Young de la colle est compris entre 0,5 et 10 MPa, et préférentiellement compris entre 0,5 et 3 MPa.

7. Élément de carrosserie de véhicule selon l'une quelconque des revendications précédentes, dans lequel la colle présente un allongement à la rupture compris entre 20% et 800%.

8. Élément de carrosserie de véhicule selon l'une quelconque des revendications précédentes, dans lequel le rapport entre le coefficient de dilatation thermique du panneau d'aspect formant la peau extérieure (20) et le coefficient de dilatation thermique de la pièce de structure intermédiaire (10) est compris entre 1 et 5.

9. Élément de carrosserie de véhicule selon l'une quelconque des revendications précédentes dans lequel le panneau d'aspect formant la peau extérieure (20) a une épaisseur comprise entre 1,5 mm et 5 mm.

10. Élément de carrosserie de véhicule selon l'une quelconque des revendications précédentes, notamment un hayon ou une porte de coffre arrière, ou un becquet de toit ou de hayon, ou un capot ou une porte latérale.

## Patentansprüche

1. Karosserieelement für Kraftfahrzeug, umfassend ein eine Außenhaut bildendes Verkleidungspaneel (20) aus Thermoplast und ein Zwischenbauteil (10) aus duroplastischem Material, das einen Wärmeausdehnungskoeffizienten aufweist, der kleiner ist als der des Verkleidungspaneels, wobei die zwei Teile durch einen Klebstoffstrang (30) verbunden sind, der auf einer Fläche eines der zwei Teile dem anderen Teil gegenüber angeordnet ist, **dadurch gekennzeichnet, dass** der Klebstoff ausgewählt ist aus den Klebstoffen des Zweikomponenten-Polyurethan-Typs, die aus dem Gemisch aus einem Polyol und einem Isocyanat gebildet sind, und gleichzeitig aufweist:
- einen Schwund kleiner als 0,5 % in der Polymerisationsphase des Klebstoffs,
- eine Restverformung kleiner als 3 % bei einer auferlegten Verformung von 15 % bei 110 °C für eine Dauer von 15 Minuten.

2. Karosserieelement für Fahrzeug nach Anspruch 1, wobei das Verkleidungspaneel (20) aus einem Material gebildet ist, das ausgewählt ist aus einem der folgenden Materialien:
- Polypropylen (PP) oder
- Polycarbonat (PC) oder
- Acrylnitril-Butadien-Styrol (ABS) oder
- Acrylnitril-Butadien-Styrol/Polycarbonat (ABS/PC) oder
- Polycarbonat/Polypropylenterephthalat (PC/PBT) oder
- Polycarbonat/Polyethylenterephthalat (PC/PET) oder
- Polyethylen (PE).

3. Karosserieelement für Fahrzeug nach Anspruch 1 oder Anspruch 2, wobei das Zwischenbauteil (10) aus einem Material gebildet ist, das ausgewählt ist aus einem der folgenden Materialien:
- Polypropylen (PP), gegebenenfalls mit Glasfasern (des PPGFL-Typs) verstärkt oder mit Talk angereichert, oder
- SMC mit Polyester-Matrix oder
- Vinylester oder
- glasfaser- oder carbonverstärktes Epoxidharz.

4. Karosserieelement für Fahrzeug nach einem der vorhergehenden Ansprüche, wobei der Klebstoffstrang (30) eine Breite (L₀) kleiner als 25 mm und bevorzugt kleiner als 15 mm hat.

5. Karosserieelement für Fahrzeug nach einem der vorhergehenden Ansprüche, wobei der Klebstoffstrang (30) eine Dicke (e) zwischen 0,8 mm und 3 mm und bevorzugt zwischen 1 mm und 2 mm hat.

6. Karosserieelement für Fahrzeug nach einem der vorhergehenden Ansprüche, wobei der Young-Modul des Klebstoffs zwischen 0, 5 und 10 MPa und bevorzugt zwischen 0,5 und 3 MPa beträgt.

7. Karosserieelement für Fahrzeug nach einem der vorhergehenden Ansprüche, wobei der Klebstoff eine Bruchdehnung zwischen 20 % und 800 % aufweist.

8. Karosserieelement für Fahrzeug nach einem der vorhergehenden Ansprüche, wobei das Verhältnis zwischen dem Wärmeausdehnungskoeffizienten des die Außenhaut bildenden Verkleidungspaneels (20) und dem Wärmeausdehnungskoeffizienten des Zwischenbauteils (10) zwischen 1 und 5 beträgt.

9. Karosserieelement für Fahrzeug nach einem der vorhergehenden Ansprüche, wobei das die Außenhaut bildende Verkleidungspaneel (20) eine Dicke zwischen 1,5 mm und 5 mm hat.

10. Karosserieelement für Fahrzeug nach einem der vorhergehenden Ansprüche, insbesondere eine Heckklappe oder eine hintere Kofferraumtür, oder ein Dach- oder Heckspoiler, oder eine Motorhaube oder eine Seitentür.

## Claims

1. A vehicle body part of a motor vehicle comprising a thermoplastic appearance panel forming an outer skin (20) and an intermediate structural part (10) made of a thermosetting material having a coefficient of thermal expansion lower than that of the appearance panel, the two parts being joined by an adhesive bead (30) disposed on a surface of one of the two parts facing the other part, **characterised in that** the adhesive is selected from two-component polyurethane adhesives formed by mixing a polyol and an isocyanate, and has both:
- a shrinkage of less than 0.5 % during the polymerisation phase of the adhesive, and
- a residual deformation of less than 3 % for an imposed deformation of 15 % at 110 °C for a duration of 15 minutes.

2. The vehicle body part of a motor vehicle according to claim 1, wherein the appearance panel (20) is made of a material selected from one of the following:
- polypropylene (PP), or
- polycarbonate (PC), or
- acrylonitrile-butadiene-styrene (ABS), or
- acrylonitrile-butadiene-styrene / polycarbonate (ABS/PC), or
- polycarbonate / polybutylene terephthalate (PC/PBT), or
- polycarbonate / polyethylene terephthalate (PC/PET), or
- polyethylene (PE).

3. The vehicle body part of a motor vehicle according to claim 1 or 2, wherein the intermediate structural part (10) is made of a material selected from one of the following:
- polypropylene (PP), optionally reinforced with glass fibres (PP GFL type) or filled with talc, or
- polyester-matrix SMC, or
- vinyl ester, or
- epoxy reinforced with glass or carbon fibres.

4. The vehicle body part of a motor vehicle according to any one of the preceding claims, wherein the adhesive bead (30) has a width (L₀) of less than 25 mm, and preferably less than 15 mm.

5. The vehicle body part of a motor vehicle according to any one of the preceding claims, wherein the adhesive bead (30) has a thickness (e) between 0.8 mm and 3 mm, and preferably between 1 mm and 2 mm.

6. The vehicle body part of a motor vehicle according to any one of the preceding claims, wherein the Young's modulus of the adhesive is between 0.5 MPa and 10 MPa, and preferably between 0.5 MPa and 3 MPa.

7. The vehicle body part of a motor vehicle according to any one of the preceding claims, wherein the adhesive has an elongation at break between 20 % and 800 %.

8. The vehicle body part of a motor vehicle according to any one of the preceding claims, wherein the ratio between the coefficient of thermal expansion of the appearance panel forming the outer skin (20) and the coefficient of thermal expansion of the intermediate structural part (10) is between 1 and 5.

9. The vehicle body part of a motor vehicle according to any one of the preceding claims, wherein the appearance panel forming the outer skin (20) has a thickness between 1.5 mm and 5 mm.

10. The vehicle body part of a motor vehicle according to any one of the preceding claims, in particular a tailgate or a rear trunk door, or a roof or tailgate spoiler, or a bonnet, or a side door.
